# EUROPÄISCHE PATENTSCHRIFT

(11) **EP 0 912 310 B1**
(45) Veröffentlichungstag und Bekanntmachung des Hinweises auf die Patenterteilung: **07.11.2001**
(21) Anmeldenummer: 97934423.1
(22) Anmeldetag: 09.07.1997
(51) Int. Cl.: B29B 17/02, B03B 9/06

(54) **VERFAHREN UND ANLAGE ZUR AUFBEREITUNG VON MISCHKUNSTSTOFFEN**
PROCESS AND SYSTEM FOR TREATMENT OF MIXED PLASTIC MATERIALS
PROCEDE ET DISPOSITIF POUR LE TRAITEMENT DE MATIERES PLASTIQUES MIXTES

(30) Priorität: 10.07.1996 DE 19629470; 10.07.1996 DE 19629473
(43) Veröffentlichungstag der Anmeldung: 06.05.1999
(73) Patentinhaber: SiCon GmbH, 57271 Hilchenbach (DE)
(72) Erfinder: GUSCHALL, Heiner, D-57271 Hilchenbach (DE); REMY, Jan-Peer, D-57271 Hilchenbach (DE)
(74) Vertreter: Baumgärtel, Gunnar, Dr.
(86) Internationale Anmeldenummer: DE9701481
(87) Internationale Veröffentlichungsnummer: WO9801276

(56) Entgegenhaltungen:
- EP-A- 0 542 593
- EP-A- 0 557 816
- EP-A- 0 633 110
- EP-A- 0 635 308
- EP-A- 0 692 355
- EP-A- 0 716 888
- WO-A-93/05883
- CH-A- 530 822
- DE-A- 1 924 640
- DE-A- 4 306 781
- DE-A- 4 407 768
- US-A- 5 497 949
- US-A- 5 518 188
- DJAWADI G H ET AL: "SORTENREINE PVC-ABFALLE AUFBEREITEN PROCESSING PURE PVC WASTE" KUNSTSTOFFE, Bd. 84, Nr. 2, 1.Februar 1994, Seiten 121/122, 124-126, XP000433554

## Beschreibung

Die Erfindung betrifft ein Verfahren zur Aufbereitung von Mischkunststoffen nach dem Oberbegriff des Anspruchs 1 und eine Anlage hierfür nach dem Oberbegriff des Anspruchs 14.

Bei der Aufbereitung von Mischkunststoffen werden regelmäßig Partikel, die ein bestimmtes, vorgebbares Gewicht oder eine bestimmte, vorgebbare Dichte überschreiten, aussortiert. Diese aussortierten Partikel werden als Schwerfraktion bezeichnet. Es kann sich dabei beispielsweise um den Schwergutaustrag eines Windsichters handeln.

Die bei der Mischkunststoffaufbereitung anfallende Schwerfraktion ist sehr heterogen zusammengesetzt. Neben harten Kunststoffen unterschiedlicher Größe und sonstigen dickwandigen Kunststoffen enthält sie Inertstoffe, wie z.B. Glas, Metall und feuchtes Papier, das aus Getränketüten oder Tiefkühlverpackungen stammt. Darüber hinaus enthält die Schwerfraktion auch leichte Folienteile, weil bei der Mischkunststoffaufbereitung die Trennung von Leicht- und Schwergut niemals mit 100-prozentiger Genauigkeit erfolgen kann.

Diese heterogen zusammengesetzte Schwerfraktion wird bei der Mischkunststoffaufbereitung häufig als Abfall entsorgt, da eine Aufbereitung unter wirtschaftlichen Gesichtspunkten nicht als sinnvoll erscheint. Ein Beispiel hierfür ist die aus der DE 43 06 781 A1 bekannte technische Lehre. Darin werden ein Verfahren und eine Anlage zur Aufbereitung von kunststoffreichen Müllgemischen beschrieben, wobei in einem Windsichter Schwerpartikel aus dem aufzubereitenden Müllgemisch aussortiert werden. Aus dieser Schwerfraktion werden Eisenmetalle und paramagnetische Metalle zur separaten Verwertung abgetrennt. Anschließend wird die Schwerfraktion nochmals einer Dichtesortierung unterworfen, bei der in der Schwerfraktion enthaltene leichte Bestandteile entfernt und wieder den Aufbereitungsstufen für das Leichtgut zugeführt werden. Die übrigen Bestandteile der Schwerfraktion werden als Reststoffe entsorgt.

Da aber die Schwerfraktion regelmäßig große Mengen an schweren Kunststoffen enthält, bedeutet dies, daß bei der Aufbereitung von Mischkunststoffen derzeit große Mengen an Kunststoffabfall produziert werden.

In der EP 0 633 110 A1 ist ein Verfahren zur Abtrennung von Fasern aus einem Ölgemisch beschrieben, Dabei wird das Ölgemisch zunächst in einem Shredder und anschließend in einer Hammermühle zerkleinert, Das zerkleinerte Material wird dann mehrfach nach Dichte und/oder Gewicht sortiert, wobei als Leichtfraktion jeweils die Fasern entnommen werden. Diese werden nicht weiter aufbereitet. Die Schwerfraktion wird abschließend in einer Mühle pulverisiert. Eine Aufbereitung der Schwerfraktion findet ebenfalls nicht statt.

In der EP 0 692 355 A1 sind ein Verfahren und eine Anlage zur Aufwertung von bei Zerkleinerungsprozessen entstehenden heterogenen Stoffgemischen beschrieben. Dabei wird das Stoffgemisch als Ganzes zerkleinert, gesiebt und anschließend agglomeriert.

In der US-PS-5,518,188 ist eine Methode zur Aufbereitung von Teppichresten beschrieben. Die Teppichreste werden zunächst in einem Shredder zerkleinert, anschließend granuliert und dann in eine Leicht- und eine Schwerfraktion getrennt. Es wird dann lediglich die Schwerfraktion weiter aufbereitet. Eine Aufbereitung der Leichtfraktion erfolgt demgegenüber nicht; diese wird in Form von Ballen entnommen und abtransportiert.

In der EP 0 716 881 A1 ist ein Verfahren zum Zerlegen und sortenreinen Trennen von wiederaufzubereitenden Verbundbauteilen offenbart. Danach wird das aufzubereitende Gemisch zunächst in einer Schneidmühle und anschließend in einer Hammer- oder Prallmühle zerkleinert. Sodann findet eine mehrfache Trennung der Verbundbauteile nach Dichte und/oder Gewicht in einem Zick-Zack-Sichter bzw. einem Airoherd statt. Die dabei gewonnenen Leicht- bzw. Schwerfraktionen werden jeweils getrennt gesammelt. Eine weitere Aufbereitung dieser Fraktionen findet nicht statt.

Aus der EP 0 635 308 A1 sind ein Verfahren und eine Vorrichtung zur Aufbereitung von Formkörpern aus unterschiedlichen Polymeren bekannt. Dabei wird das aufzubereitende Material zunächst durch eine Prall- und/oder Schlagbeanspruchung zerkleinert. Anschließend findet mehrfach eine Trennung des aufzubereitenden Materials nach Dichte und/oder Gewicht statt. Dabei wird die Schwerfraktion jeweils ohne weitere Aufbereitung entnommen.

Der Erfindung liegt die Aufgabe zugrunde, bei der Aufbereitung von Mischkunststoffen einen möglichst großen Anteil der Kunststoffe für eine spätere thermische oder rohstoffliche Verwertung vorzubereiten.

Diese Aufgabe wird erfindungsgemäß durch ein Verfahren mit den Merkmalen des Anspruchs 1 sowie durch eine Anlage mit den Merkmalen des Anspruchs 14 gelöst.

Die Erfindung beruht auf der Erkenntnis, daß die bei der Aufbereitung von Mischkunststoffen aussortierte Schwerfraktion mit einem verhältnismäßig einfachen und kostengünstigen Verfahren so aufbereitet werden kann, daß eine rohstoffliche Verwertung der in dieser Schwerfraktion enthaltenen Kunststoffe ohne weiteres möglich ist. Dazu ist es erforderlich, die Schwerfraktion in einer separaten Aufbereitungseinrichtung zu zerkleinern und anschließend (z.B. durch Sieben und/oder elektrostatisches Sortieren) weiter trocken aufzubereiten.

Durch die separate Aufbereitung der Schwerfraktion wird der bei der Aufbereitung von Mischkunststoffen anfallende Kunststoffabfall erheblich vermindert. Denn während bisher die in der Schwerfraktion enthaltenen Kunststoffe als Abfall entsorgt wurden, werden diese nunmehr in einer separaten Aufbereitungseinrichtung so behandelt, daß auch diese Kunststoffe einer weiteren Verwertung zugeführt werden können.

Dabei ist auch zu berücksichtigen, daß die Schwerfraktion aus der Mischkunststoffaufbereitung nicht nur Hartkunststoffe im engeren Sinne, wie z.B. Polystyrol, sondern auch dickwandige Teile weicherer Materialien, wie z.B. Polypropylen und Polyethylen, enthält. Dies ist u.a. darauf zurückzuführen, daß beim Aussortieren der Schwerfraktion während der Mischkunststoffaufbereitung, wozu häufig eine Windsichtung verwendet wird, sowohl die Dichte als auch das Gewicht der Kunststoffe eine Rolle spielen. (Grundsätzlich kann die Trennung eines Kunststoffgemisches in eine Leichtfraktion und eine Schwerfraktion nach Gewicht oder nach Dichte erfolgen. Es ist auch eine Kombination dieser Sortierschritte denkbar, so daß beispielsweise nur Stoffe, die ein bestimmtes Gewicht und eine bestimmte Dichte überschreiten, der Schwerfraktion zugerechnet werden. Ferner ist zu beachten, daß sich in der Praxis (Windsichtung) das Sortieren nach Dichte und Gewicht häufig nicht trennen lassen.)

Ferner wird die Leichtfraktion in einer separaten Einrichtung fein Zermahlen, um die Voraussetzungen für deren weitere Aufbereitung zu schaffen.

Als trockene Verfahrensschritte, die sich an die Zerkleinerung der Schwerfraktion anschließen können, eignen sich insbesondere eine Siebung und/oder eine elektrostatische Sortierung. Mit der elektrostatischen Sortierung können insbesondere PVC-Bestandteile abgetrennt werden, so daß ein PVC-freies, thermisch verwertbares Kunststoffgut geschaffen wird.

Im einzelnen richtet sich die jeweilige Kombination der verfahrensschritte Sieben und/oder elektrostatisch Sortieren nach der konkreten Zusammensetzung des aufzubereitenden Materials. Dies wird unten anhand der Ausführungsbeispiele detailliert erläutert. In jedem Fall ist die vorhergehende Zerkleinerung eine wichtige Voraussetzung, die die Effektivität der weiteren Verfahrensschritte entscheidend beeinflußt.

Bei dem erfindungsgemäßen Verfahren hat es sich weiter als vorteilhaft erwiesen, wenn die Schwerfraktion durch Prall und/oder Schlag zerkleinert wird. Dazu kann beispielsweise eine Hammermühle verwendet werden.

Durch die Zerkleinerung der Schwerfraktion durch Prall und/ oder Schlag werden die folgenden, für das Aufbereitungsergebnis sehr wichtigen Effekte erzielt:
1. Die Hartkunststoffe werden zuverlässig von anhaftenden Inertstoffen befreit, so daß letztere als Feingut abgesiebt werden können. Dadurch wird auch der Ascheanteil in dem aufzubereitenden Gut erheblich reduziert. Dies ist von großer Bedeutung für eine spätere rohstoffliche Verwertung.
2. Feuchtes oder durchweichtes Papier wird bei der Zerkleinerung durch Schlag oder Prall aufgefasert. Dies erleichtert die spätere Separation des Papiers von den Kunststoffen. Ohne eine vorhergehende Zerkleinerung durch Schlag oder Prall ist das Gewicht der feuchten Papieranteile dem Gewicht der Kunststoffe sehr ähnlich, so daß eine zuverlässige Trennung dieser Bestandteile kaum möglich ist.
   Derartige Effekte ließen sich bei einer Zerkleinerung der Schwerfraktion durch Schnitt oder Scherung, z.B. in einem Schredder, nicht erreichen. Bei diesen Zerkleinerungsverfahren neigen die feuchten, durchweichten Papieranteile zur Klumpenbildung, was deren spätere Trennung von den Kunststoffen sogar noch erschweren kann.
3. Bei der Zerkleinerung durch Schlag und/oder Prall, insbesondere in einer Hammermühle, erhält man trotz eines hohen Anteils an Inertstoffen, z.B. Glas, ein gleichmäßiges Korn. Dies ermöglicht zu einem späteren Zeitpunkt eine elektrostatische Sortierung der Kunststoffe.

Um die Zerkleinerungsstufe zu entlasten und nur solche Partikel in die Zerkleinerungsstufe zu führen, bei denen eine Zerkleinerung tatsächlich erforderlich ist, kann vorgesehen sein, daß vor die Zerkleinerungsstufe ein Grob- oder Mittelkornsieb geschaltet ist, mit dem größere Körner aus der Schwerfraktion abgesiebt werden, und daß nur diese abgesiebten Körner in die Zerkleinerungsstufe geleitet werden. Die kleineren Bestandteile des aufzubereitenden Materials (d.h. der Siebunterlauf) können an der Zerkleinerungsstufe vorbei zu der nächsten Aufbereitungsstufe geleitet werden.

Das Grob- oder Mittelkornsieb wird beispielsweise derart ausgelegt, daß der Siebüberlauf durch Körner gebildet wird, die eine Größe von mehr als etwa 10 mm aufweisen. Selbstverständlich läßt sich aber auch ein beliebiges anderes Kriterium für die Trennung der Körner nach Größe wählen.

Um den Anteil feinkörniger Inertstoffe sowie den PVC-Anteil in der Schwerfraktion zu reduzieren und um eine einheitliche Korngröße bei der Aufbereitung zu erhalten, werden bei einer bevorzugten Ausführungsform der Erfindung diejenigen Körner, die eine bestimmte, vorgebbare Größe unterschreiten (z.B. 1 mm bis 2 mm), mit einem Feinkornsieb abgesiebt und aus dem Aufbereitungsprozeß entfernt.

Es hat sich gezeigt, daß die Kombination einer Feinkornabsiebung mit einer vorhergehenden Zerkleinerung durch Schlag und/oder Prall zu überraschenden Ergebnissen hinsichtlich der Qualität der aufbereiteten Kunststoffe führt. Bei Versuchen unter labortechnischen Bedingungen konnte der (für die weitere Verwertung hinderliche) PVC-Anteil des aufbereiteten Materials unter 2 % gedrückt werden. Auch die weiteren Inertstoffe, wie z.B. Glas, sind in dem aufbereiteten Kunststoffgut nur in so geringen Mengen vorhanden, daß sie dessen späterer rohstofflicher Verwertung, z.B. als Reduktionsmittel für die Stahlindustrie, nicht entgegenstehen.

Als Ergänzung der Feingutabsiebung, bei der kleine Partikel aus dem aufzubereitenden Material entfernt werden, ist bei dem erindungsgemäßen Verfahren vorzugsweise eine pneumatische Entfernung von Leichtgut, wie z.B. Folienteilen, Papier und dergl., vorgesehen.

Dabei hat es sich als besonders vorteilhaft erwiesen, wenn das Leichtgut mittels einer Absaugvorrichtung, die oberhalb des Förderstroms des aufzubereitenden Materials angeordnet ist, abgesaugt wird. Alternativ ist es aber auch möglich, das Leichtgut mittels einer Windsichtung von den übrigen Bestandteilen der Schwerfraktion zu trennen.

Da in den Anlagen zur Mischkunststoffaufbereitung die Abtrennung magnetischer Bestandteile aus dem aufzubereitenden Material niemals zu 100% erfolgt (oder diese erst nach dem Aussortieren der Schwerfraktion vorgesehen ist), ist es vorteilhaft, wenn auch in der separaten Einrichtung zur Aufbereitung der Schwerfraktion magnetische Stoffe entfernt werden. Dieser Verfahrensschritt sollte vorzugsweise gleich am Beginn der Aufbereitung der Schwerfraktion stehen. Dabei kann sowohl eine Abscheidung ferromagnetischer Materialien mittels eines Magneten als auch die Abtrennung von Nichteisenmetallen (paramagnetischen Materialien) mittels eines Nichteisenmetallabscheiders, z.B. durch eine Wirbelstromscheidung, vorgesehen sein.

Bei der Aufbereitung von Mischkunststoffen werden die schweren Bestandteile meist mit Hilfe eines Windsichters aussortiert. Daher sind zur Durchführung des vorliegenden Verfahrens Transport- und/oder Fördermittel vorzusehen, mit denen der Schwergutaustrag des Windsichters zu der separaten Einrichtung zur Aufbereitung der Schwerfraktion befördert werden kann. Dabei kann insbesondere vorgesehen sein, daß die Anlage zur Aufbereitung von Mischkunststoffen und die separate Einrichtung zur Aufbereitung der Schwerfraktionen in unmittelbarer Nachbarschaft angeordnet sind, so daß der Transport der Schwerfraktion über eine stationäre Fördereinrichtung, beispielsweise eine Dosierrinne, erfolgen kann.

Welche der vorbeschriebenen Verfahrensschritte bei der Aufbereitung der Schwerfraktion in dem jeweiligen Einzelfall tatsächlich angewandt werden, hängt u.a. davon ab, welcher Behandlung die Schwerfraktion bereits während der Mischkunststoffaufbereitung unterworfen war. Häufig erfolgt bei der Aufbereitung von Mischkunststoffen die Aussortierung der Schwerfraktion erst, nachdem das Material bereits zerkleinert, von magnetischen und/oder nichtmagnetischen Bestandteilen befreit, gesiebt oder auf sonstige Weise behandelt worden ist. Je umfangreicher und gründlicher die Behandlung vor dem Aussortieren der Schwerfraktion war, desto weniger Aufwand ist bei der späteren Aufbereitung der Schwerfraktion erforderlich.

Einige der vorbeschriebenen Ausführungsformen des erfindungsgemäßen Verfahrens eignen sich jedoch nicht nur zur Aufbereitung der Schwerfraktion, die in einer Anlage zur Mischkunststoffaufbereitung aussortiert wurde, sondern sie sind ganz allgemein zur Aufbereitung von Hartkunststoffen (z.B. Polypropylen, Polycarbonat, technische Kunststoffe) geeignet. Dabei wird das aufzubereitende Material durch Prall und/oder Schlag auf eine vorgebbare Maximalgröße zerkleinert, der Feinkornanteil aus dem aufzubereitenden Material abgesiebt und Leichtgut aus dem aufzubereitenden Material pneumatisch entfernt.

Hinsichtlich der Vorteile dieses Verfahrens bei der Aufbereitung von Hartkunststoffen sei auf die obigen Ausführungen betreffend die Schwerfraktion aus der Mischkunststoffaufbereitung verwiesen.

Unabhängig davon, in welchem Zusammenhang das erfindungsgemäße Verfahren verwendet wird, ist eine besonders vorteilhafte Ausführungsform dadurch charakterisiert, daß
a) magnetische Stoffe aus der Schwerfraktion entfernt werden,
b) Partikel, die eine bestimmte, vorgebbare Größe überschreiten, aus der Schwerfraktion abgesiebt, auf die vorgebbare Größe zerkleinert und wieder der Schwerfraktion zugeführt werden,
c) der Feinkornanteil, insbesondere Partikel mit einer Größe von weniger als 1 mm bis 2 mm, aus der Schwerfraktion abgesiebt wird,
d) Leichtgut aus der Schwerfraktion mittels mindestens einer über dem Materialstrom angeordneten Absaugvorrichtung abgesaugt wird und
e) die Schwerfraktion in einem Silo homogenisiert wird.

Durch das Verfahren wird ein Kunststoffgut so hoher Qualität geschaffen, daß dieses abschließend zur Sortentrennung problemlos elektrostatisch sortiert werden kann.

Bei einer bevorzugten Ausführungsform des erfindungsgemäßen Verfahrens werden vor der Trennung des aufzubereitenden Materials in Leichtfraktion und Schwerfraktion zunächst magnetische Bestandteile aussortiert. Dies kann beispielsweise dadurch erfolgen, daß ferromagnetische Bestandteile mittels eines Überbandmagneten abgeschieden werden.

Diese Ausführungsform der Erfindung kann dadurch weitergebildet werden, daß die aussortierten magnetischen Bestandteile zerkleinert werden, daß das zerkleinerte Gut erneut in magnetische und nichtmagnetische Bestandteile getrennt wird und daß die nichtmagnetischen Bestandteile wieder dem aufzubereitenden Material zugeführt werden. Dieser Prozeß kann gegebenenfalls mehrfach wiederholt werden, indem jeweils der magnetische Austrag erneut zerkleinert wird, um nichtmagnetische Bestandteile, die noch an magnetischen Teilen haften, abzutrennen.

Nach dem Entfernen der magnetischen Bestandteile erfolgt vorzugsweise eine Zerkleinerung des aufzubereitenden Materials auf eine bestimmte, vorgebbare Größe. Dazu kann eine Zerkleinerungsstufe derart mit einer Siebstufe kombiniert werden, daß diejenigen Partikel, die eine bestimmte Größe überschreiten und den Siebüberlauf bilden, vor der weiteren Aufbereitung zunächst zerkleinert werden.

Die Zerkleinerung wird durch Prall und/oder Schlag, beispielsweise mit einer Hammermühle, durchgeführt. Diese Art der Zerkleinerung arbeitet auch dann sehr zuverlässig, wenn in dem aufzubereitenden Material noch größere Mengen an Inertstoffen, wie z.B. Glassplitter und Sand, enthalten sind.

Die Abscheidung der Inertstoffe kann auf einer Feinsiebstrecke erfolgen. Die Inertstoffe, die zu einem großen Teil durch Feingut gebildet werden, werden dabei als Siebunterlauf aus dem Aufbereitungszyklus entnommen.

Nachdem das Material von magnetischen Stoffen befreit, zerkleinert und gesiebt worden ist, befindet sich dieses in einem guten Zustand für die Trennung in eine Kunststoffleichtfraktion und eine Kunststoffschwerfraktion.

Als eine einfache Möglichkeit zur Trennung in Leichtfraktion und Schwerfraktion bietet sich eine Windsichtung an. Da bei der Windsichtung Luft als Trennmedium verwendet wird, ermöglicht diese eine Dichtetrennung ohne nasse Aufbereitungsstufen. Diesen Vorteil erreicht man auch, wenn Leichtfraktion und Schwerfraktion durch Absaugen der Leichtfraktion getrennt werden.

Grundsätzlich kann die Trennung aber auch mit einem nassen Verfahren zum Sortieren nach Dichte und/oder Gewicht durchgeführt werden, z.B. durch Verwendung eines Schwimm-Sink-Scheiders oder eines Hydrozyklons.

Nach der Trennung des aufzubereitenden Gutes in Leichtfraktion und Schwerfraktion wird die Leichtfraktion fein zermahlen (vorzugsweise auf eine Größe von weniger als 2 mm). Dies kann beispielsweise in einer Prallscheibenmühle oder einem Plastkompaktor aber auch in einem Agglomerator geschehen. Durch das feine Zermahlen wird vermieden, daß im weiteren Aufbereitungsprozeß gewölleartige Gebilde entstehen.

Alternativ kann die Leichtfraktion unter Zugabe von Thermoplasten pelletiert werden, die bei der Mischkunststoffaufbereitung anfallen.

Da die Leichtfraktion neben den leichten Kunststoffteilen, die beispielsweise beim Kraftfahrzeugrecycling insbesondere durch Schaumstoffe gebildet werden, auch flüchtige Stoffe, wie z.B. Papier, enthalten kann, ist bei einer Variante des Verfahrens vorgesehen, daß flüchtige Bestandteile aus der zermahlenen Leichtfraktion abgesaugt werden.

Um die Leichtfraktion in ein möglichst gleichmäßiges, homogenes Gut zu überführen, ist es vorteilhaft, wenn die zermahlene Leichtfraktion (z.B. mit einem Windsichter) erneut nach Dichte und/oder Gewicht sortiert wird und solche Bestandteile, die ein bestimmtes Gewicht bzw. eine bestimmte Dichte unterschreiten erneut zermahlen werden. Dadurch wird sichergestellt, daß auch die leichtesten Bestandteile (durch mehrfaches Zermahlen) in ein homogenes Schüttgut überführt werden, da keine Gewölle bildet.

Zur Aufbereitung der Leichtfraktion nach dem Zermahlen kann ferner vorgesehen sein, daß magnetische Stoffe, und insbesondere paramagnetische Stoffe (Nichteisenmetalle), aussortiert werden.

Eine bevorzugte Kombination der vorstehend beschriebenen Verfahrensschritte ist durch die Merkmale des Anspruchs 13 charakterisiert. Ein derartiges Verfahren eignet sich insbesondere zum Aufbereiten eines Kunststoffgemisches, das beim Kraftfahrzeugrecycling anfällt. Dabei werden Kraftfahrzeuge geshreddert und das geshredderte Gut anschließend in verschiedene Fraktionen getrennt. Eine dieser Fraktionen, die auch als Shredderleichtfraktion bezeichnet wird, besteht überwiegend aus den Kunststoffbestandteilen der Kraftfahrzeuge. Sie enthält große Mengen an Hartkunststoffen und anderen schweren (insbesondere dickwandigen) Kunststoffteilen, die beispielsweise von den Stoßfängern und den Instrumententrägern der Kraftfahrzeuge herrühren, aber auch Leichtkunststoffe, insbesondere geschäumte Kunststoffe. Darüber hinaus sind in der Shredderleichtfraktion auch Metalle enthalten, die bei der Aufbereitung der Shredderleichtfraktion von den Kunststoffen getrennt werden müssen.

Das erfindungsgemäße Verfahren beruht auf der Erkenntnis, daß bei der Aufbereitung von Kunststoffgemischen mit einem hohen Anteil an Hartkunststoffen und anderen schweren Kunststoffen, wie sie insbesondere beim Kraftfahrzeugrecycling anfallen, nur ein Teil des aufzubereitenden Materials einer aufwendigen Aufbereitung einschließlich eines besonders feinen Zermahlens unterzogen werden muß. Es hat sich gezeigt, daß die schweren Kunststoffe, die einen wesentlichen Bestandteil des aufzubereitenden Gemisches bilden, mit erheblich einfacheren Verfahrensschritten derart aufbereitet werden können, daß eine Weiterverwertung des aufbereiteten Gutes, z.B. als Reduktionsmittel in der Stahlindustrie, problemlos möglich ist.

Aus diesen Gründen ist erfindungsgemäß vorgesehen, daß das aufzubereitende Material nach Dichte und/oder Gewicht sortiert wird und daß anschließend die Leichtfraktion und die die Schwerfraktion (die insbesondere die harten Kunststoffe enthält) getrennt aufbereitet werden.

Die Trennung des aufzubereitenden Materials in eine Leichtfraktion und eine Schwerfraktion kann grundsätzlich nach Gewicht oder nach Dichte erfolgen. Es ist auch eine Kombination dieser Sortierschritte denkbar, so daß beispielsweise nur Stoffe, die ein bestimmtes Gewicht und eine bestimmte Dichte überschreiten, der Schwerfraktion zugerechnet werden. Ferner ist zu berücksichtigen, daß sich in der Praxis das Sortieren nach Dichte und Gewicht häufig nicht exakt trennen lassen. Bei der Verwendung eines Windsichters zum Sortieren des aufzubereitenden Materials spielt neben der Dichte stets auch die Größe (und damit das Gewicht) der Partikel eine wichtige Rolle.

Die konkreten Werte für die Dichte bzw. das Gewicht, die zur Unterscheidung zwischen Leichtfraktion und Schwerfraktion vorgesehen sind, richten sich u.a. nach der geplanten späteren Verwendung des aufbereiteten Materials. Bei pneumatischen Verfahren zur Trennung von Leichtfraktion und Schwerfraktion lassen sich diese beispielsweise durch Variation des Luftstroms gezielt einstellen.

Bei der Aufbereitung der Shredderleichtfraktion aus dem Kraftfahrzeugrecycling werden die Trennkriterien vorzugsweise so gewählt, daß Schaumstoffe der Leichtfraktion und die klassischen Hartkunststoffe der Schwerfraktion zugeschlagen werden. Im Übergangsbereich können z.B. Kunststoffe mit der Dichte von Polystyrol liegen. (Bei diesen Kunststoffen hängt es dann wesentlich von der Kornform und -größe ab, welcher Fraktion sie zugeschlagen werden.)

Das erfindungsgemäße Verfahren hat gegenüber den bekannten Aufbereitungsmethoden den wesentlichen Vorteil, daß eine die aufwendige Aufbereitung unter Einschluß eines zeitaufwendigen feinen Zermahlens nur bei einem Teil des aufzubereitenden Materials angewandt wird. Darüber hinaus wird bei diesem Verfahren die Abscheidung der Metalle erheblich erleichtert; denn die in dem aufzubereitenden Material enthaltenen Metalle werden beim Sortieren des Materials nach Dichte bzw. Gewicht überwiegend der Schwerfraktion zugeschlagen.

Das erfindungsgemäße Verfahren zur Aufbereitung von Mischkunststoffen, bei dem die Schwerfraktion in einer gesonderten Aufbereitungseinrichtung behandelt wird, wird vorzugsweise mit einer Anlage durchgeführt, die durch die Merkmale des Anspruchs 14 charakterisiert ist.

Diese Anlage ermöglicht mit einfachen, kostengünstigen Mitteln die Durchführung des erfindungsgemäßen Verfahrens.

Bevorzugte Ausführungsformen dieser Anlage werden in den Unteransprüchen 15 bis 23 beansprucht.

Weitere Vorteile der Erfindung werden bei der nachfolgenden Beschreibung eines Ausführungsbeispiels anhand der Figuren deutlich werden.

Es zeigen:
- Figuren 1a bis 1c -: eine diagrammatische Darstellung verschiedener Teile einer Aufbereitungsanlage, die insbesondere für die Shredderleichtfraktion aus dem Kraftfahrzeugrecycling geeignet ist;
- Figur 1d -: eine diagrammatische Darstellung einer Ausführungsform einer Einrichtung für die Aufbereitung der Schwerfraktion, die insbesondere für die Aufbereitung von Mischkunststoffen aus dem Hausmüll geeignet ist;
- Figur 2 -: eine Absaugvorrichtung zur Trennung von Leichtfraktion und Schwerfraktion;
- Figur 3 -: einen Windsichter zur Trennung von Leichtfraktion und Schwerfraktion;
- Figur 4 -: eine zweite Ausführungsform eines Windsichters zur Trennung von Leichtfraktion und Schwerfraktion.

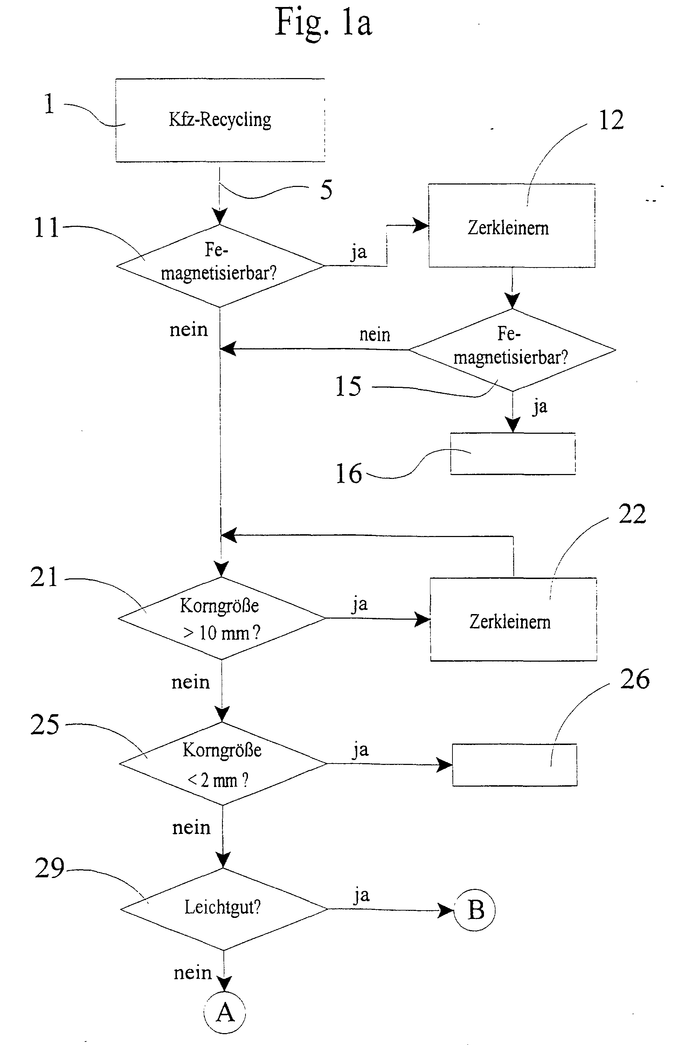

Die Figuren 1a bis 1c zeigen eine diagrammatische Darstellung einer Aufbereitungsanlage, die insbesondere für die Shredderleichtfraktion aus dem Kraftfahrzeugrecycling geeignet ist.

In Figur 1a sind diejenigen Aufbereitungsstufen der Anlage dargestellt, in denen das aufzubereitende Material bis zu der Trennung in eine Leichtfraktion und eine Schwerfraktion behandelt wird.

Als erste Aufbereitungsstufe ist ein Magnetabscheider 11 vorgesehen, der beispielsweise als Überbandmagnet ausgebildet sein kann und dem die Shredderleichtfraktion aus einer Kraftfahrzeugrecyclinganlage 1 über geeignete Fördermittel 5 zugeführt wird.

Der magnetische Austrag des Magnetabscheiders 11 ist mit einer Hammermühle 12 verbunden, der ein weiterer Magnetabscheider 15 nachgeschaltet ist. Der magnetische Austrag des zweiten Magnetabscheiders 15 führt zu einem Container 16, während sein nichtmagnetischer Austrag mit dem nichtmagnetischen Austrag des ersten Magnetabscheiders 11 zusammengeführt wird.

Als nächste Aufbereitungsstufe ist eine Grob- oder Mittelkornsiebstrecke 21 vorgesehen, deren Siebüberlaufaustrag mit einer Hammermühle 22 verbunden ist, deren Austrag zurück zu der Siebstrecke 21 führt.

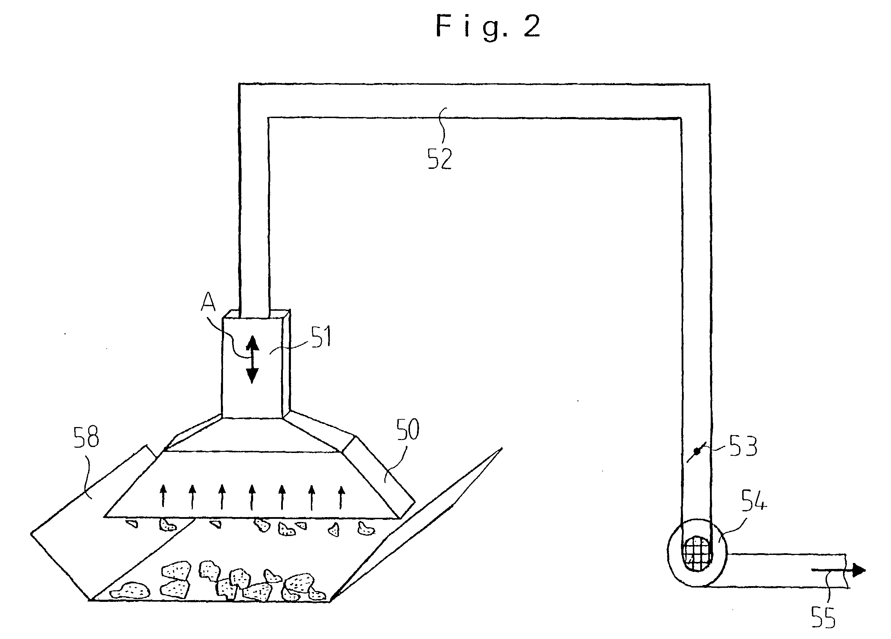

Der Siebunterlaufaustrag der Grob- oder Mittelkornsiebstrekke 21 ist mit einer Feinsiebstrecke 25 verbunden, deren Siebunterlaufaustrag eine weitere separate Aufbereitungseinrichtung 26 und deren Siebüberlaufaustrag eine Vorrichtung 29 zum Sortieren des aufzubereitenden Material in Leichtfraktion und Schwerfraktion (vergl. Figuren 2 bis 4) nachgeschaltet ist.

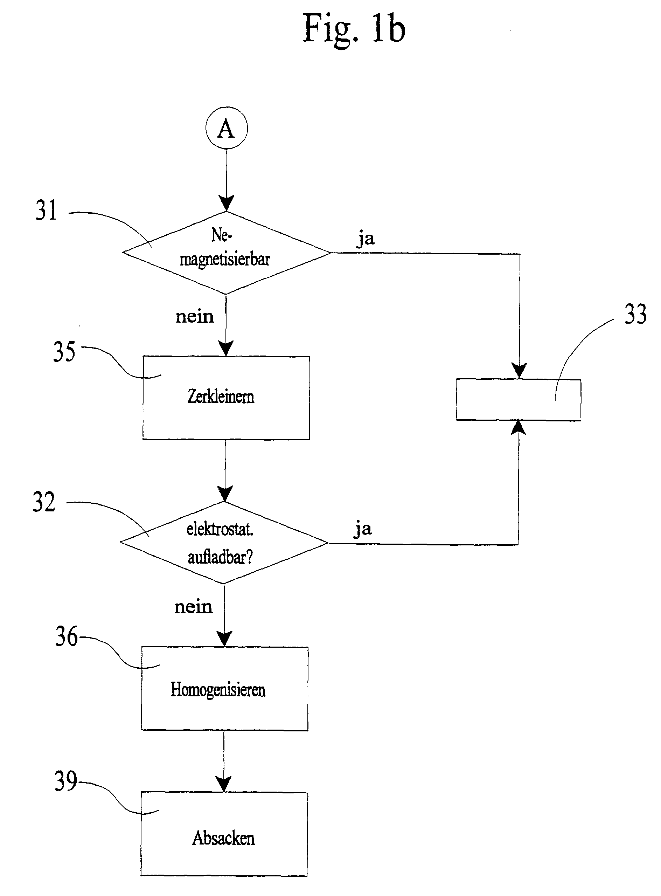

Hinter dem Schwergutaustrag dieser Vorrichtung 29 ist die in Figur 1b dargestellte Aufbereitungseinrichtung für die Schwerfraktion des aufzubereitenden Materials angeordnet.

Diese Aufbereitungseinrichtung umfaßt als erste Aufbereitungsstufe einen Abscheider 31 für Nichteisenmetalle (paramagnetische Metalle), der beispielsweise als Wirbelstromscheider ausgebildet sein kann.

Dem Metallabscheider 31 nachgeschaltet ist ein Elektrostatikscheider 32. Sowohl dessen Austrag für elektrostatisch aufladbare Materialien als auch der Metallaustrag des Metallabscheiders 31 sind mit einem Container 33 verbunden.

Zwischen den Metallabscheider 31 und den Elektrostatikscheider 32 ist eine Schneidmühle 35 mit einem Lochsieb geschaltet.

An die Abscheider 31, 32 schließen sich außerdem ein Mischsilo 36 zur Homogenisierung des aufbereiteten Materials und eine Absackstation 39 an.

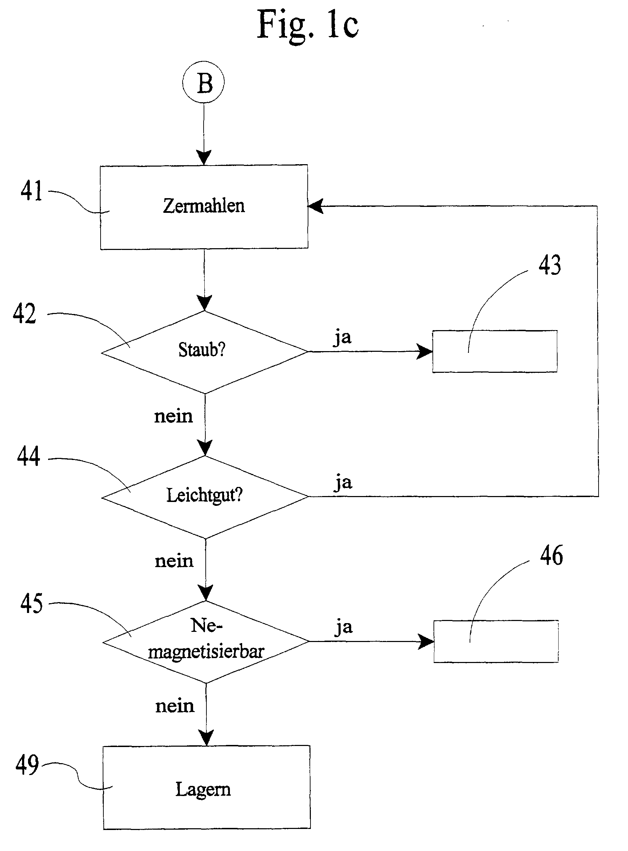

In Figur 1c ist derjenige Teil der Aufbereitungsanlage dargestellt, in dem die in der Vorrichtung 29 angefallene Leichtfraktion behandelt wird.

Erste Aufbereitungsstufe dieses Anlagenteils ist ein Prallscheibenmühle 41 zum feinen Zermahlen des Leichgutes, der eine Feinsiebstrecke 42 zum Aussieben von Staub und ähnlichen Feinstbestandteilen des Leichtgutes nachgeschaltet sein kann. Der Siebunterlaufaustrag der Feinsiebstrecke 42 ist mit einem Container 43 verbunden, während deren Siebüberlaufaustrag zu einem Windsichter 44 führt.

Von dem Leichtgutaustrag des Windsichters 44 führt ein Fördermittel zurück zu der Mühle 41. Dem Schwergutaustrag des Windsichters ist ein Nichteisenmetallabscheider 45 nachgeschaltet, bei dem es sich beispielsweise um einen Wirbelstromscheider handeln kann. Zur Aufnahme der abgeschiedenen Metalle ist ein Container 46 vorgesehen.

Dem Nichteisenmetallabscheider 45 ist außerdem ein Silo 49 nachgeschaltet, in dem das aufbereitete Material zur Weiterverwertung bereitgehalten wird.

Mit der anhand der Figuren 1a bis 1c beschriebenen Aufbereitungsanlage kann das erfindungsgemäße Verfahren wie folgt durchgeführt werden:

Der Aufbereitungsanlage wird die Shredderleichtfraktion aus einer Kraftfahrzeugrecyclinganlage 1 über geeeignete Fördermittel 5 zugeführt. Diese Shredderleichtfraktion besteht zu einem großen Teil aus harten, schweren Kunststoffen, die z.B. von den Instrumententrägern und den Stoßfängern der Kraftfahrzeuge herrühren. Darüber hinaus enthält das aufzubereitende Material auch einen Leichtgutanteil, der sich überwiegend aus Schaumstoffen zusammensetzt.

Das aufzubereitende Material ist auch mit Metallen vermengt, da beim Shreddern der Kraftfahrzeuge eine Vermischung und Verhakelung der Materialien erfolgt und daher eine saubere Trennung des geshredderten Materials in eine ausschließlich aus Kunststoffen bestehende Fraktion und eine aus Metallen und anderen schweren Materialien bestehende Fraktion nicht möglich ist.

Das aufzubereitende Material wird zunächst mit Hilfe eines Magnetabscheiders 11 in ferromagnetische und nicht-ferromagnetische Bestandteile getrennt. Die ferromagnetischen Bestandteile werden in einer Hammermühle 12 zerschlagen. Dabei werden Kunststoffe, Dreck und andere Materialien von den ferromagnetischen Stoffen abgeschlagen. Der besondere Vorteil der Verwendung einer Hammermühle liegt darin, daß mit dieser auch dann ein gutes Zerkleinerungsergebnis erzielt wird, wenn das aufzubereitende Material große Mengen an Inertstoffen, wie z.B. Glas und Dreck, enthält.

Das in der Hammermühle 12 zerschlagende Material wird anschließend mit Hilfe eines weiteren Magnetabscheiders 15 erneut in einen ferromagnetischen und einen nicht-ferromagnetischen Anteil getrennt. Der ferromagnetische Anteil wird zur weiteren Verwertung in einem Container 16 gelagert; der nichtmagnetische Anteil wird mit dem nichtmagnetischen Anteil des ersten Magnetabscheiders 11 zusammengeführt und auf eine Grob- oder Mittelkornsiebstrecke 21 geleitet.

Den Siebüberlaufaustrag der Grob- oder Mittelkornsiebstrekke 21 bilden beispielsweise Körner mit einer Größe von mehr als 5 mm bis 10 mm; es sind jedoch auch andere Trennkriterien denkbar. Diese Körner werden in einer weiteren Hammermühle 22 zerkleinert und anschließend erneut auf die Siebstrekke 21 geleitet. Dadurch wird sichergestellt, daß ausschließlich Körner mit einer Größe von weniger als 5 mm bis 10 mm, die den Siebunterlauf der Siebstrecke 21 bilden, zu der Feinsiebstrecke 25 gelangen. Je kleiner die Korngröße gewählt wird, desto höher ist der Aufschlußgrad bei Kupferkabeln und dergl. Andererseits verringert sich mit abnehmender Sieblochgröße auch der Durchsatz der Zerkleinerungsstufe.

Auf der Feinsiebstrecke 25 wird Feingut (beispielsweise Körner mit einer Größe von weniger als 2 mm) aus dem aufzubereitenden Material abgesiebt und in einer weiteren Aufbereitungseinrichtung 26 behandelt. Das Feingut umfaßt sowohl einen flusigen Leichtanteil als auch schwere Inertstoffe. Der flusige Leichtanteil, der sich während vorhergehender Förderprozesse in der Aufbereitungseinrichtung (z.B. mittels Vibrationsförderern) von den schweren Inertstoffen getrennt und zusammengerollt hat, kann durch eine Absaugvorrichtung abgetrennt und (hinter Pos. 29) der Leichtfraktion des aufzubereitenden Materials zugeschlagen werden. Die verbleibende Inertfrakion kann durch einen Zickzacksichter oder einen Trenntisch weiter in Kunststoffe und Metalle aufgegliedert werden.

Zusammenfassend wird mit Hilfe der beiden Siebstrecken 21, 25 ein einheitliches Schüttgut geschaffen, das nun hinsichtlich seiner Dichte oder seines Gewichts sortiert werden kann. Ferner wurden auf der Feinsiebstrecke 25 Inertstoffe aus dem aufzubereitenden Material entnommen, so daß das Kunststoffgut nur noch mit sehr geringen Mengen an Fremdstoffen belastet ist.

In der Vorrichtung 29 zum Trennen des aufzubereitenden Material in Leichtfraktion und Schwerfraktion (vergl. Figuren 2 bis 4) erfolgt eine Trennung des aufzubereitenden Gutes in schwere und leichte Stoffe (Schwerfraktion und Leichtfraktion). Dazu wird vorzugsweise ein Windsichter verwendet.

Trotz der einheitlichen Korngröße des in den Windsichter geleiteten Materials erfolgt die Trennung aber nicht streng nach der Dichte der Partikel. Es spielen auch die verbliebenen Unterschiede in der Korngröße und die Kornform eine Rolle. Neben der Dichte ist daher auch das Gewicht der Partikel für das Sortieren von Bedeutung.

Die Trennung des aufzubereitenden Materials in eine Schwerfraktion und eine Leichtfraktion ist für das vorliegende Aufbereitungsverfahren von entscheidender Bedeutung. Es hat sich gezeigt, daß die Schwerfraktion, die in erster Linie die Hartkunststoff-Bestandteile der Kraftfahrzeuge umfaßt, ohne Agglomeration trocken derart aufbereitet werden kann, daß das aufbereitete Gut stofflich weiterverwertbar ist.

Da die Kunststoffteile aus dem Kraftfahrzeugrecycling zu einem großen Teil aus Hartkunststoffen bestehen, lassen sich mit dem erfindungsgemäßen Verfahren die Kosten der Aufbereitung erheblich reduzieren. Darüber hinaus wird die Abscheidung der noch im auzbereitenden Material enthaltenen Metalle deutlich vereinfacht, da diese der Schwerfraktion zugeschlagen werden und daher nicht die Gefahr besteht, daß sie sich in einem Agglomerator mit angeschmolzenen Kunststoffen verbinden.

Die Aufbereitung der Hartkunststoffe, die als Schwergut aus der Trennvorrichtung 29 entnommen werden, ist in Fig. 1b dargestellt.

Zunächst werden mit Hilfe eines Nichteisenmetallabscheiders 31, bei dem es sich beispielsweise um einen Wirbelstromabscheider handeln kann, paramagnetische Metalle aus dem aufzubereitenden Material aussortiert und in einen Container 33 geleitet.

Das von Metallen (z.B. Kabelresten) befreite aufzubereitende Gut wird dann mit einer Schneidmühle 35 auf eine Größe von maximal 6 mm zerkleinert.

Anschließend werden mit Hilfe des Elektrostatikscheiders 32 diejenigen Materialien aus dem aufzubereitenden Material entfernt, die stärker elektrostatisch aufladbar sind als die aufzubereitenden Kunststoffe. Diese Methode ist auch zur Abscheidung von PVC geeignet, das sich gegenüber nahezu allen anderen Kunststoffen negativ auflädt.

Nach der Abscheidung elektrostatisch aufladbarer Materialien wird die Schwerfraktion in einem Mischsilo 36 homogenisiert. Das homogenisierte Schüttgut wird in einer Absackstation 39 in Säcke gefüllt und zum Abtransport bereitgehalten.

Die aufbereitete Schwerfraktion weist eine so hohe Qualität auf, daß sie beispielsweise in der Stahlindustrie als Reduktionsmittel eingesetzt werden kann. Diese hohe Qualität wird mit einem vergleichsweise einfachen Aufbereitungsverfahren erzielt, bei dem weder das bei der Leichtfraktion erforderliche sehr feine Zermahlen (s.u.) noch andere energieaufwendige Aufbereitungsschritte, wie z.B. nasse Aufbereitungsstufen, die eine anschließende Trocknung des Materials erfordern, angewandt werden. Daher arbeitet dieses Verfahren außerordentlich wirtschaftlich.

Die Behandlung des bei der Trennung in Leichtfraktion und Schwerfraktion angefallenen Leichtgutes ist in Fig. 1c dargestellt.

Die Leichtfraktion, die in erster Linie Schaumstoffe umfaßt, wird in der Prallscheibenmühle 41 auf eine Größe von weniger als 2 mm fein Zermahlen. Dadurch wird ein aus der faserhaltigen Leichtfraktion ein Schüttgut gebildet, aus dem auch im weiteren Aufbereitungsprozeß keine gewölleartigen Gebilde mehr entstehen können.

Anstatt einer Prallscheibenmühle kann auch eine andere für faserhaltiges Material geeignet Zerkleinerungseinrichtung (z.B. ein Plastkompaktor) verwandt werden. Eine weitere Alternative ist die Zerkleinerung der Leichtfraktion in einem Agglomerator. Um flüchtige Bestandteile, wie z.B. Papier, die in der Leichtfraktion enthalten sein können, zu entfernen, kann der Agglomerator mit Absaugvorrichtungen versehen sein. Ebenso ist denkbar, daß dem Agglomerator eine über dem Förderstrom des agglomerierten Materials angeordnete Absaugglocke (vergl. Fig. 2) nachgeschaltet ist.

Das zermahlene Gut wird anschließend über eine Feinsiebstrecke 42 geleitet, um z.B. Staub abzusieben.

Nach der Siebung kann das zermahlene Material einer erneuten Windsichtung unterzogen werden. Das in dem Windsichter 44 angefallene Leichtgut umfaßt diejenigen faserhaltigen Teile, die bem ersten Zermahlen noch nicht hinreichend kompaktiert wurden. Diese Bestandteile werden wieder in die Mühle 41 geleitet und dort erneut zermahlen.

Das in dem Windsichter 44 angefallene Schwergut zeichnet sich durch eine einheitliche Korngrößenverteilung und Kornform aus und ist daher bestens für eine weitere Verwertung konditoniert.

Dieses Schüttgut wird zunächst in einem Nichteisenmetallabscheider 45 von paramagnetischen Metallen befreit, die in einen Container 46 geführt werden, und anschließend in einem Silo 49 zum Abtransport bereitgehalten.

Aufgrund der vorhergehenden Agglomeration bilden die in dem Silo 49 gelagerten Leichtkunststoffe ein hinreichend rieselfähiges Produkt, das als Reduktionsmittel verwendet werden kann. Wichtig ist, daß bei dem vorliegenden Verfahren das zeit- und energieaufwendige feine Zermahlen bzw. Agglomerieren oder Pelletieren auf diejenigen Bestandteile des aufzubereitenden Materials beschränkt wurde, für die sie zur Herstellung eines einheitlichen Schüttgutes tatsächlich notwendig war.

Es ist selbstverständlich, daß die obigen Werte für die Trennkriterien hinsichtlich der Korngröße auf den unterschiedlichen Siebstrecken 21, 25, 41 lediglich beispielhaft Werte innerhalb eines bevorzugten Bereichs angeben. Je nach Einsatzgebiet der Anlage sind auch andere Trennkriterien denkbar.

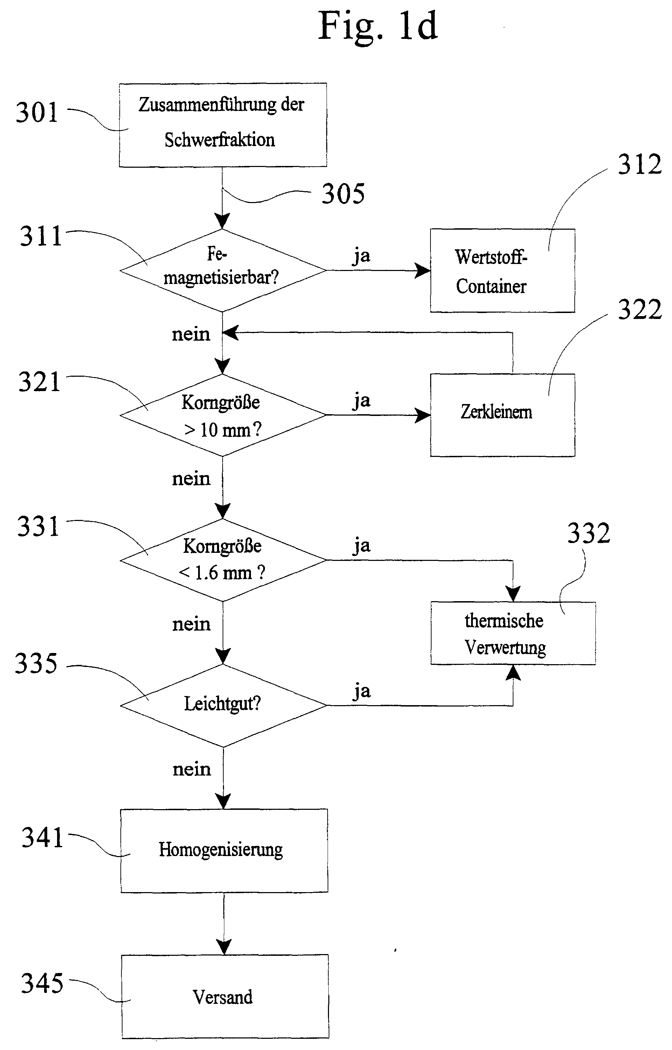

In Fig. 1d ist eine Abwandlung der in Fig. 1b dargestellten Einrichtung zur Aufbereitung einer Schwerfraktion gezeigt, die sich insbesondere zur Aufbereitung der Schwerfraktion gemischter Kunststoffe aus dem Hausmüll eignet.

In dem Ausführungsbeispiel gemäß Figur 1d werden die verschiedenen Teile der Schwerfraktion, die in einer Anlage zur Aufbereitung von Mischkunststoffen aussortiert wurden, in einem Lager 301 zusammengeführt. Eine solche Zusammenführung unterschiedlicher Teile der Schwerfraktion kann z.B. deshalb erforderlich sein, weil in der Mischkunststoffaufbereitungsanlage mehrere Windsichter parallel betrieben werden, in denen jeweils Schwergut anfällt. Das Schwergut dieser Windsichter wird bei Position 301 zusammengeführt, wo es zwischengelagert werden kann.

Die in dem Lager 301 zusammengeführte Schwerfraktion kann gezielt über eine Dosierrinne 305 in eine separate Einrichtung 311 - 345 zur Aufbereitung der Schwerfraktion geleitet werden.

Diese separate Aufbreitungseinrichtung umfaßt als erste Aufbereitungsstufe einen Überbandmagneten 311, dessen magnetischer Austrag mit einem Wertstoff-Container 312 und dessen nichtmagnetischer Austrag mit einer Grobkorn-Siebstrecke 321 verbunden ist.

Die Grobkorn-Siebstrecke 321 ist beispielsweise derartig ausgebildet, daß Körner mit einer Größe von mehr als 10 mm den Siebüberlauf und kleinere Körner den Siebunterlauf bilden. Der Siebüberlauf-Austrag der Siebstrecke 321 wird zu einer Hammermühle 322 geleitet, während der Siebunterl auf-Austrag mit einem Feinkornsieb 331 verbunden ist.

Der Austrag der Hammermühle 322 wird zurück zu der Grobkorn-Siebstrecke 321 geführt. Alternativ (oder zusätzlich) ist es möglich, daß die Hammermühle 322 einen Siebeinsatz aufweist, der nur für Körner mit einer Größe von weniger als 10 mm durchlässig ist. In diesem Fall kann der Austrag der Hammermühle 322 unmittelbar mit der Feinkorn-Siebstrekke 331 verbunden sein.

Die Feinkorn-Siebstrecke 331 ist derart ausgebildet, daß Körner mit einer Größe von weniger als 1,6 mm als Siebunterlauf bei Position 332 einer thermischen Verwertung zugeführt werden. Der Siebüberlauf-Austrag wird demgegenüber unter einer durch eine Absaugglocke gebildeten pneumatischen Absaugvorrichtung 335 hindurchgeführt, mit der leichte Bestandteile, wie z.B. Folienteile, Papier und dergl., aus dem aufzubereitenden Material abgesaugt werden können.

Nach dem Passieren der Absaugvorrichtung 335 gelangt das aufzubereitende Material in ein Mischsilo 341. Dort kann es homogenisiert werden, bevor es in der Absackstation 345 zum Weitertransport vorbereitet wird.

Mit der in Figur 1d dargestellten Einrichtung zur Behandlung der Schwerfraktion aus der Mischkunststoffaufbereitung wird das erfindungsgemäße Verfahren wie folgt durchgeführt:

Der Schwergutaustrag verschiedener, parallel angeordneter Windsichter einer Mischkunststoffaufbereitungsanlage wird bei Position 301 als Schwerfraktion gesammelt. Diese Schwerfraktion hat in der Mischkunststoffaufbereitungsanlage, bevor sie durch eine Windsichtung aussortiert wurde, in der Regel schon mehrere Verfahrensschritte durchlaufen. So können beispielsweise bereits eine Vorzerkleinerung, eine Abscheidung magnetischer Materialien, eine Aussortierung von Inertstoffen, eine Vortrocknung und eine Siebung erfolgt sein. Dennoch enthält die Schwerfraktion neben Hartkunststoffen unterschiedlicher Größe stets noch weitere Bestandteile, wie z.B. Glas, Metall und feuchtes Papier.

Insbesondere ist die Vortrocknung in Mischkunststoffaufbereitungsanlagen nicht ausreichend, um durchweichte Getränketüten oder Tiefkühlverpackungen vollständig zu trocknen.

Diese Schwerfraktion einer Mischkunststoffaufbereitungsanlage wird über eine Dosierrinne 305 der separaten Aufbereitungseinrichtung 311 - 345 zugeführt.

Die Schwerfraktion passiert dort zunächst einen Überbandmagneten 311, wodurch magnetische Materialien abgeschieden und in einem Wertstoff-Container 312 gesammelt werden.

Anschließend wird das aufzubereitende Material über eine Grobkorn-Siebstrecke 321 geleitet. Dabei bilden Partikel mit einer Größe von weniger als 10 mm den Siebunterlauf. Diese werden pneumatisch abgesaugt und auf einer Vibrationsrinne zu einem Feinkornsieb 331 geführt.

Der Siebüberlauf-Austrag der Siebstrecke 321 wird in einer Hammermühle 322 zerkleinert und anschließend wieder auf die Siebstrecke 321 geführt. Insgesamt wird sichergestellt, daß ausschließlich Partikel mit einer Größe von weniger als 10 mm zu der Feinkorn-Siebstrecke 331 geleitet werden.

Von besonderer Bedeutung bei diesen ersten Verfahrensschritten ist die Zerkleinerung der Schwerfraktion in der Hammermühle 322. In der Hammermühle werden die Kunststoffe von anhaftenden Inertstoffen befreit. Letztere können dann mit Hilfe eines Feinkornsiebs abgesiebt werden. Weiterhin wird feuchtes und durchweichtes Papier in der Hammermühle 322 zerkleinert und aufgefasert. Dies ermöglicht in weiteren Verfahrensschritten eine pneumatische Separation des Papiers. Schließlich ist bemerkenswert, daß in einer Hammermühle selbst bei einem hohen Anteil an Fremdstoffen ein sehr gleichmäßiges Kunststoffkorn erzeugt wird. Dies ist wichtig, um das aufbereitete Material später elektrostatisch nach Kunststoffsorten trennen zu können.

Das mit Hilfe der Hammermühle 322 und des Grobkornsiebs 321 zur weiteren Verarbeitung optimal vorbereitete, auf eine Größe von weniger als 10 mm zerkleinerte Gut wird nun auf der Feingut-Siebstrecke 331 gesiebt. Dabei werden Partikel mit einer Größe von weniger als 1,6 mm aus dem aufzubereitenden Material entfernt und in einem Behälter 332 gesammelt, von wo sie beispielsweise einer thermischen Verwertung zugeführt werden können.

Es hat sich gezeigt, daß durch die Absiebung des Feinkornanteils auf der Siebstrecke 331 Inertstoffe, wie z.B. Glas, Asche und PVC fast vollständig aus der aufzubereitenden Schwerfraktion entfernt werden. Dies ist u.a. eine Folge der vorhergehenden Zerkleinerung der Schwerfraktion in der Hammermühle 322. Insgesamt wird erreicht, daß die Schwerfraktion Inertstoffe nur noch in so geringen Mengen enthält, daß diese einer weiteren thermischen oder rohstofflichen Verwertung des aufbereiteten Materials nicht entgegenstehen.

Der Siebüberlaufaustrag der Feinkorn-Siebstrecke 331 wird zur weiteren Aufbereitung unter einer Absaugvorrichtung 335 (vergl. Fig. 2) hindurchgeleitet. Dabei werden Folienbestandteile, Papier und noch vorhandene Aschereste aus der Schwerfraktion abgesaugt.

Auch für diesen Verfahrensschritt ist die vorhergehende Zerkleinerung der Schwerfraktion in der Hammermühle 322 von großer Bedeutung; denn in der Hammermühle wurden das Papier und die Folienbestandteile zerschlagen und aufgefasert.

Dadurch wurden diese Bestandteile in einen Zustand überführt, der das Entfernen mit Hilfe einer Absaugglocke ermöglicht.

Das von der Absaugvorrichtung 335 abgesaugte Material wird einem Behälter 332 zugeführt, wo es für eine weitere thermische Verwertung bereitgehalten wird.

Nach dem Passieren der Absaugvorrichtung 335 wird die im wesentlichen nur noch aus harten oder dickwandigen Kunststoffen bestehende Schwerfraktion in das Mischsilo 341 geleitet. Dort wird das aufbereitete Gut homogenisiert und zur weiteren Verwendung bereitgehalten.

Aus dem Mischsilo 341 wird das aufbereitete Material bei Bedarf entnommen und zur Vorbereitung des Abtransports in die Absackstation 345 gefördert.

Mit der vorbeschriebenen Ausführungsform der Erfindung läßt sich mit einfachen Mitteln und wenigen Verfahrensschritten ein derart hochwertiges Kunststoffgut erzeugen, daß dieses beispielsweise von der Stahlindustrie als Reduktionsmittel verwendet werden kann. Sofern es für die weitere Verwertung der Kunststoffe notwendig ist, können diese zusätzlich elektrostatisch getrennt und somit sortenrein bereitgehalten werden. Die sortenreine Trennung der Kunststoffe wird durch die Homogenität des aufbereiteten Guts mit einer einheitlichen Größe von etwa 2 mm bis 10 mm und durch den äußerst geringen Anteil an Fremdstoffen ermöglicht.

Das vorbeschriebene Verfahren läßt sich auch zur Aufbereitung von Hartkunststoffen verwenden, die nicht als Schwerfraktion bei der Mischkunststoffaufbereitung aussortiert wurden, sondern in anderem Zusammenhang angefallen sind. Dabei ist es lediglich erforderlich, daß das aufzubereitenden Gut hinreichend vorzerkleinert wurde, damit es keine bandförmigen Materialien enthält, die sich um den Rotor der Hammermühle wickeln und deren Effizienz beeinträchtigen.

In den Figuren 2 bis 4 sind unterschiedliche Vorrichtungen dargestellt, die zur Trennung des aufzubereitenden Materials in Leichtfraktion und Schwerfraktion verwendet werden können.

Die in Fig. 2 gezeigte Absaugvorrichtung umfaßt eine entlang der Richtung A höhenverstellbare Absaugglocke (Diffusor 50), die über ein Anschlußteil 51 mit einer Saugleitung 52 verbunden ist. Die Saugleitung 52 ist an ein Sauggebläse 54 angeschlossen und mit einem Luftmengenregulierer 53 versehen, mit dem die Saugleistung variiert werden kann.

Das aufzubereitende Gut wird auf einer Vibrationsrinne 58 unter der Saugglocke 50 hindurchgeführt. Durch eine gezielte Variation der Saugleistung wird festgelegt, welche Bestandteile aus dem aufzubereitenden Gemisch abgesaugt werden. Je größer die Saugleistung desto mehr (und desto schwerere) Bestandteile werden als Leichtfraktion abgesaugt.

Durch die Einstellung des Abstandes zwischen der Saugglocke 50 und der Vibrationsrinne 58 läßt sich dieser Abstand an die Größe der auf der Vibrationsrinne 58 befindlichen Teile anpassen, die wiederum davon abhängt, auf welche Größe das aufzubereitende Material zuvor zerkleinert worden ist.

Die abgesaugte Leichtfraktion wird bei Pos. 55 abgeführt und zum Agglomerieren weitergeleitet; die Schwerfraktion verbleibt auf der Vibrationsrinne 58 und wird ohne Agglomeration trocken aufbereitet.

Die anhand Fig. 2 beschriebene Absaugvorrichtung ist außerdem zur Verwendung in Pos. 335 der Aufbereitungseinrichtung aus Fig. 1d geeignet.

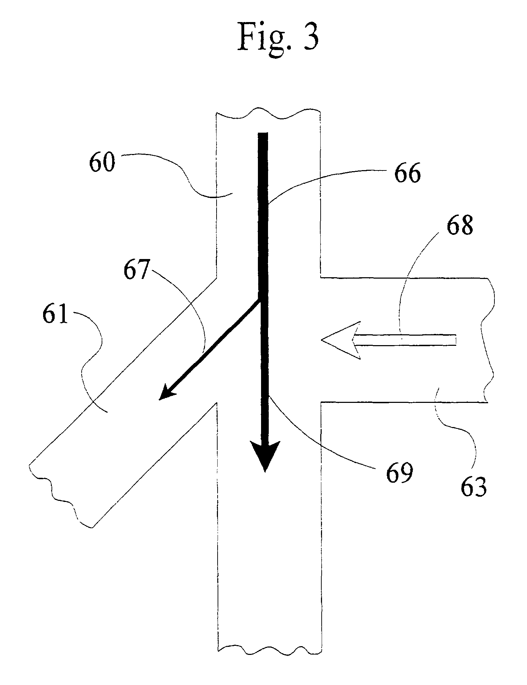

In Fig. 3 ist ein Windsichter 60 dargestellt, der im Querstrom betrieben wird.

Das aufzubereitende Gut 66 sinkt in dem Windsichter 60 zu Boden. Über einen Windkanal 63 wird ein Windstrom 68 quer zur Bewegungsrichtung des aufzubereitenden Guts 66 eingeblasen. Die leichteren Bestandteile (Leichtfraktion 67) werden durch diesen Windstrom 68 stark abgelenkt und gelangen in einen Nebenkanal 61 des Windsichters 60, während schwere Bestandteile (Schwerfraktion 69) nur schwach abgelenkt werden und in dem Hauptkanal des Windsichters 60 verbleiben.

Bei einer derartigen Trennung des aufzubereitenden Guts spielen neben der Dichte auch die Form und die Größe der Partikel eine wichtige Rolle. Als Trennkriterium sind daher sowohl die Dichte als auch das Gewicht der Partikel von Bedeutung.

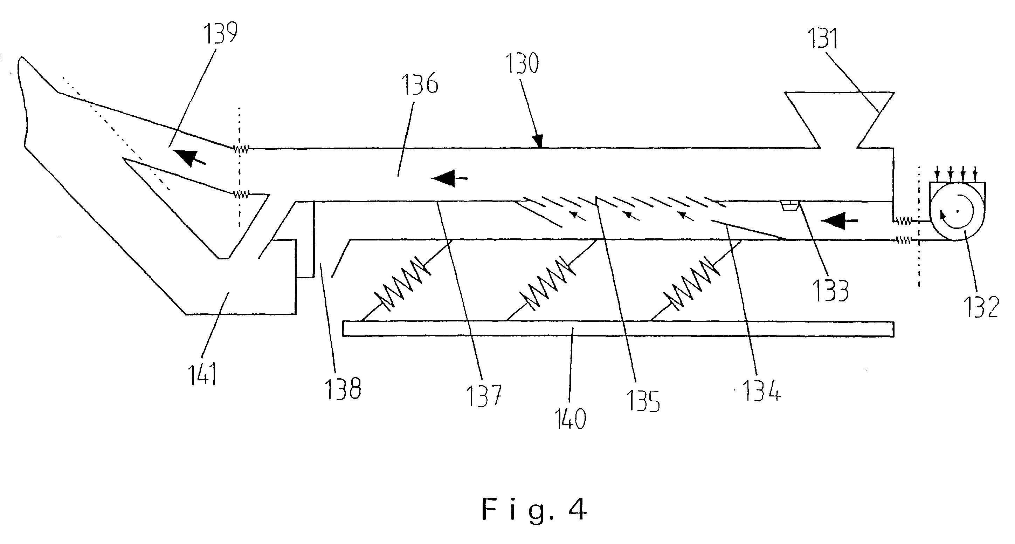

Fig. 4 zeigt eine detaillierte Prinzip-Skizze einer weiteren bevorzugten Ausführungsform des Windsichters.

Das aufzubereitende Material wird in diesen Windsichter 130 von oben durch die Aufgabe 131 eingegeben und dann von dem durch das Gebläse 132 erzeugten Luftstrom an dem Magneten 133 (sog. "Polizeimagnet" zum Aufspüren und Entfernen noch im Material enthaltener magnetischer Bestandteile) vorbei in Richtung der Leitbleche 134, 135 geführt. Das Windleitblech 134 und die verstellbaren Leitbleche 135 dienen zur Führung des Luftstroms und aufzubereitenden Materials in die Vibrationsrinne 136. Dabei sinken schwere Partikel fühzeitig zu Boden und gelangen zu dem Ausgabeschacht für die Schwerfraktion 138. Das leichtere Material gelangt hingegen in die Vibrationsrinne 136.

Die Vibrationsrinne 136 wird durch den Federantrieb 140 in Schwingungen versetzt. Im hinteren Bereich der Vibrationsrinne 136 sammelt sich der körnige Anteil des leichteren Materials auf dem Bodenabschnitt 137 und wird zu einem Kratzkettenförderer 141 geführt, mit dem er aus dem Windsichter 130 entnommen wird.

Die Vibrationsrinne 136 ist mit dem Kratzkettenföderer 141 außerdem durch einen Windkanal 139 verbunden. Durch diesen werden Folienteile und andere besonders leichte Bestandteile direkt in den mittleren Bereich des Kratzkettenförderers 141 geblasen. Dadurch wird der Eingangsbereich des Kratzkettenförderers 141 entlastet und Verstopfungen durch Folienteile vermieden.

## Patentansprüche

1. Verfahren zur Aufbereitung eines Kunststoffgemisches mit einem Anteil an schweren Kunststoffen, insbesondere zur Aufbereitung der Shredderleichtfraktion aus dem Kraftfahrzeugrecycling, bei dem
a) das aufzubereitende Material durch Prall und/oder Schlag zerkleinert wird und
b) anschließend nach Dichte und/oder Gewicht in eine leichte Kunststoffe enthaltende Leichtfraktion und eine schwere Kunststoffe enthaltende Schwerfraktion getrennt wird und
c) die Leichtfraktion zermahlen wird,
**dadurch gekennzeichnet,**
**daß** die Schwerfraktion in einer separaten Aufbereitungseinrichtung (31 - 39, 311 - 345) zerkleinert und trokken aufbereitet wird.

2. Verfahren nach Anspruch 1, **dadurch gekennzeichnet, daß** die Schwerfraktion nach der Zerkleinerung gesiebt und/ oder elektrostatisch sortiert wird.

3. Verfahren nach Anspruch 1 oder 2, **dadurch gekennzeichnet, daß** vor der Trennung des aufzubereitenden Materials in Leichtfraktion und Schwerfraktion magnetische Bestandteile aus dem aufzubereitenden Material aussortiert werden.

4. Verfahren nach Anspruch 3, **dadurch gekennzeichnet, daß** die magnetischen Bestandteile zerkleinert werden, daß das zerkleinerte Gut erneut in magnetische und nichtmagnetische Bestandteile getrennt wird und daß die nichtmagnetischen Bestandteile wieder dem aufzubereitenden Material zugeführt werden.

5. Verfahren nach einem der vorhergehenden Ansprüche, **dadurch gekennzeichnet, daß** Partikel, die eine bestimmte, vorgebbare Größe überschreiten, aus dem aufzubereitenden Material abgesiebt, auf die vorgebbare Größe zerkleinert und dem aufzubereitenen Material wieder zugeführt werden.

6. Verfahren nach Anspruch einem der vorhergehenden Ansprüche, **dadurch gekennzeichnet, daß** die Zerkleinerung durch Prall und/oder Schlag in einer Hammermühle (12, 22) erfolgt.

7. Verfahren nach einem der vorhergehenden Ansprüche, **dadurch gekennzeichnet, daß** Partikel, die eine bestimmte, vorgebbare Größe unterschreiten (Feingut), aus dem aufzubereitenden Material vor dessen Trennung in Leichtfraktion und Schwerfraktion abgesiebt werden.

8. Verfahren nach einem der vorhergehenden Ansprüche, **dadurch gekennzeichnet, daß** die Trennung des aufzubereitenden Materials in Leichtfraktion und Schwerfraktion mittels einer Windsichtung und/oder durch Absaugen der Leichtfraktion erfolgt.

9. Verfahren nach einem der vorhergehenden Ansprüche, **dadurch gekennzeichnet, daß** die Leichtfraktion in einem Agglomerator zermahlen wird.

10. Verfahren nach einem der vorhergehenden Ansprüche, **dadurch gekennzeichnet, daß** flüchtige Bestandteile aus der zermahlenen Leichtfraktion abgesaugt werden.

11. Verfahren nach einem der vorhergehenden Ansprüche, **dadurch gekennzeichnet, daß** die zermahlene Leichtfraktion nach Dichte und/oder Gewicht sortiert und das Leichtgut dieser Sortierung erneut zermahlen wird.

12. Verfahren nach einem der vorhergehenden Ansprüche, **dadurch gekennzeichnet, daß** magnetische Stoffe aus der zermahlenen Leichtfraktion aussortiert werden.

13. Verfahren nach einem der vorhergehenden Ansprüche, **dadurch gekennzeichnet, daß**
a) magnetische Bestandteile mit einem Magnetabscheider (11) aus dem aufzubereitenden Material aussortiert werden;
b) die magnetischen Bestandteile zerkleinert werden, das zerkleinerte Gut mit einem weiteren Magnetabscheider (15) in magnetische und nichtmagnetische Bestandteile getrennt wird und die nichtmagnetischen Bestandteile wieder dem aufzubereitenden Material zugeführt werden;
c) das aufzubereitende Material mit einer Hammermühle (22) auf eine vorgebbare Größe zerkleinert wird;
d) auf einer Feinsiebstrecke (25) Feingut aus dem aufzubereitenden Material abgesiebt wird;
e) das aufzubereitende Material durch eine Windsichtung in eine Leichtfraktion und eine Schwerfraktion getrennt wird;
f) die Schwerfraktion mittels eines Nichteisenmetallabscheiders (31) von paramagnetischen Metallen befreit, in einer Schneidmühle (35) zerkleinert und anschließend elektrostatisch sortiert wird;
g) die Schwerfraktion in einem Mischsilo (36) homogenisiert wird;
h) die Leichtfraktion zermahlen wird;
i) die zermahlene Leichtfraktion mittels eines Windsichters (44) in Leichtgut und Schwergut getrennt wird, wobei das Leichtgut erneut zermahlen wird;
j) die zermahlen Leichtfraktion mit einem Nichteisenmetallabscheider (45) von paramagnetischen Metallen befreit wird.

14. Anlage zur Aufbereitung eines Kunststoffgemisches mit einem Anteil an schweren Kunststoffen, insbesondere zur Aufbereitung der Shredderleichtfraktion aus dem Kraftfahrzeugrecycling, mit
a) einer Zerkleinerungsstufe zum Zerkleinern des aufzubereitenden Materials durch Prall und/oder Schlag und
b) mindestens einer nachgeschalteten Aufbereitungsstufe zur Trennung des aufzubereitenden Materials nach Dichte und/oder Gewicht in eine leichte Kunststoffe enthaltende Leichtfraktion und eine schwere Kunststoffe enthaltende Schwerfraktion sowie
c) einer Zerkleinerungsstufe zum Zermahlen der Leichtfraktion,
**gekennzeichnet durch** eine
separate Aufbereitungseinrichtung (31 - 39; 311 - 345) für die Schwerfraktion mit einer Zerkleinerungsstufe (35, 322) und weiteren trockenen Aufbereitungsstufen (32, 331) so daß nach Trennung des aufzubereitenden Materials in eine Leichtfraktion und eine Schwerfraktion die beiden Fraktionen in der Anlage jeweils separat aufbereitbar sind.

15. Anlage nach Anspruch 14, **dadurch gekennzeichnet, daß** der Zerkleinerungsstufe (35, 322) für die Schwerfraktion eine Siebstufe (331) und/oder eine Elektrostatikscheider (32) nachgeschaltet sind.

16. Anlage nach Anspruch 14 oder 15, **gekennzeichnet durch** einen Magnetabscheider (11), der der Aufbereitungsstufe (29) zum Sortieren des aufzubereitenden Materials nach Dichte und/oder Gewicht vorgeschaltet ist.

17. Anlage nach Anspruch 16, **dadurch gekennzeichnet, daß** der magnetische Austrag des vorgeschalteten Magnetabscheiders (11) mit einer Zerkleinerungsstufe (12) verbunden ist, die vor einen weiteren Magnetabscheider (15) geschaltet ist, dessen nichtmagnetischer Austrag mit weiteren Aufbereitungsstufen (21, 22) der Anlage verbunden ist.

18. Anlage nach einem der Ansprüche 14 bis 17, **gekennzeichnet durch** ein Grob- oder Mittelkornsieb (21), dessen Siebüberlauf-Austrag mit der Zerkleinerungsstufe (22) für das aufzubereitende Material verbunden ist.

19. Anlage nach einem der Ansprüche 14 bis 18, **gekennzeichnet durch** ein Feinkornsieb (25) zum Absieben von Feingut aus dem aufzubereitenden Material, das der Aufbereitungsstufe (29) zum Sortieren des aufzubereitenden Materials nach Dichte und/oder Gewicht vorgeschaltet ist.

20. Anlage nach einem der Ansprüche 14 bis 19, **dadurch gekennzeichnet, daß** die Aufbereitungsstufe (29) zur Trennung der Leichtfraktion von der Schwerfraktion des aufzubereitenden Materials als Windsichter (60, 130) oder als Absaugvorrichtung (50-54) ausgebildet ist.

21. Anlage nach einem der Ansprüche 14 bis 20, **dadurch gekennzeichnet, daß** zum Zermahlen der Leichtfraktion ein Agglomerator vorgesehen ist.

22. Anlage nach einem der Ansprüche 14 bis 21, **dadurch gekennzeichnet, daß** der Zerkleinerungsstufe (41) zum feinen Zermahlen der Leichtfraktion eine Aufbereibungsstufe (44) zum Sortieren der zermahlenen Leichtfraktion nach Dichte und/oder Gewicht nachgeschaltet ist, deren Leichtgutaustrag mit der Zerkleinerungsstufe (41) verbunden ist.

23. Anlage nach einem der Ansprüche 14 bis 22, **dadurch gekennzeichnet, daß** der Zerkleinerungstufe (41) zum feinen Zermahlen der Leichtfraktion ein Metallabscheider (45) nachgeschaltet sind.

## Claims

1. Method for processing a plastics mixture with a proportion of heavy plastics, more particularly for processing the shredded light fractions from motor vehicle recycling, wherein
a) the material to be processed is pulverised by impact and/or beating and
b) then separated according to density and/or weight into a light fraction containing light plastics and a heavy fraction containing heavy plastics and
c) the light fraction is ground,
**characterised in that**
the heavy fraction is pulverised in a separate processing device (31-39, 311-345) and processed dry.

2. Method according to claim 1 **characterised in that** the heavy fraction is screened and/or electrostatically sorted after pulverisation.

3. Method according to claim 1 or 2 **characterised in that** prior to the separation of the material to be processed into light fraction and heavy fraction, magnetic constituent parts are sorted out from the material which is to be processed.

4. Method according to claim 3 **characterised in that** the magnetic constituent parts are pulverised, that the pulverised material is separated once more into magnetic and non-magnetic constituent parts and that the non-magnetic constituent parts are reintroduced to the material which is to be processed.

5. Method according to one of the preceding claims **characterised in that** particles which exceed a certain predeterminable size are screened out from the material to be processed, pulverised to the predeterminable size and then reintroduced to the material which is to be processed.

6. Method according to one of the preceding claims **characterised in that** pulverising is carried out by impact and/or beating in a hammer mill (12, 22).

7. Method according to one of the preceding claims **characterised in that** particles which do not reach a certain predeterminable size (fine material) are screened out from the material to be processed prior to separation of the latter into light fraction and heavy fraction.

8. Method according to one of the preceding claims **characterised in that** separation of the material to be processed into light fraction and heavy fraction is carried out by air separation and/or by sucking off the light fraction.

9. Method according to one of the preceding claims **characterised in that** the light fraction is pulverised in an agglomerator.

10. Method according to one of the preceding claims **characterised in that** volatile constituent parts are sucked out from the ground light fraction.

11. Method according to one of the preceding claims **characterised in that** the ground light fraction is sorted according to density and/or weight and the light material of this sorted portion is ground once more.

12. Method according to one of the preceding claims **characterised in that** magnetic substances are sorted out from the ground light fraction.

13. Method according to one of the preceding claims **characterised in that**
a) magnetic constituent parts are sorted out from the material to be processed by a magnetic separator (11)
b) the magnetic constituent parts are pulverised, the pulverised material is separated with a further magnetic separator (15) into magnetic and non-magnetic constituent parts and the non-magnetic constituent parts are supplied back again to the material to be processed;
c) the material to be processed is pulverised with a hammer mill (22) to a predeterminable size;
d) fine material is screened out from the material to be processed on a fine-screen path (25);
e) the material to be processed is separated into a light fraction and a heavy fraction through air separation;
f) the heavy fraction is freed of paramagnetic metals by means of a non-ferrous metal separator (31), pulverised in a cutting mill (35) and then electrostatically sorted;
g) the heavy fraction is homogenised in a mixing silo (36);
h) the light fraction is ground;
i) the ground light fraction is separated by an air separator (44) into light material and heavy material wherein the light material is then ground again;
j) the ground light fraction is freed of paramagnetic metals by a non-ferrous metal separator (45).

14. Apparatus for processing a plastics mixture with a proportion of heavy plastics, more particularly for processing shredded light fraction from motor vehicle recycling, with
a) a pulverising stage for pulverising the material which is to be processed by impact and/or beating and
b) at least one processing stage on the output side for separating the material which is to be processed according to density and/or weight into a light fraction containing light plastics and a heavy fraction containing heavy plastics, as well as
c) a pulverising stage for grinding the light fraction
**characterised by**
a separate processing device (31-39; 311-345) for the heavy fraction with a pulverisation stage (35, 322) and further dry processing stages (32, 331) so that after separation of the material to be processed into a light fraction and a heavy fraction the two fractions can each be processed separately in the apparatus.

15. Apparatus according to claim 14 **characterised in that** a screening stage (331) and/or an electrostatic separator (32) are connected in after the pulverising stage (35, 322) for the heavy fraction.

16. Apparatus according to claim 14 or 15 **characterised by** a magnetic separator (11) which is provided in front of the processing stage (29) for sorting the material according to density and/or weight.

17. Apparatus according to claim 16 **characterised in that** the magnetic output of the magnetic separator (11) on the input side is connected to a pulverising stage (12) which is connected in in front of a further magnetic separator (15) whose non-magnetic output is connected to further processing stages (21, 22) of the apparatus.

18. Apparatus according to one of claims 14 to 17 **characterised by** a coarse or medium grain screen (21) whose screen overflow outlet is connected to the pulverising stage (22) for the material being processed.

19. Apparatus according to one of claims 14 to 18 **characterised by** a fine grain screen (25) for screening off fine material from the material being processed which is provided in front of the processing stage (29) for sorting the material according to density and/or weight.

20. Apparatus according to one of claims 13 to 19 **characterised in that** the processing stage (29) for separating the light fraction from the heavy fraction of the material being processed is formed as an air separator (60, 130) or as a suction device (50-54).

21. Apparatus according to one of claims 14 to 20 **characterised in that** an agglomerator is provided for grinding the light fraction.

22. Apparatus according to one of claims 14 to 21 **characterised in that** a processing stage (44) for sorting the ground light fraction according to density and/or weight is connected in after the pulverising stage (1) for fine grinding the light fraction, and the light material output is connected to the pulverising stage (41).

23. Apparatus according to one of claims 14 to 22 **characterised in that** a metal separator (45) is provided after the pulverising stage (1) for fine grinding the light fraction.

## Revendications

1. Procédé pour le traitement d'un mélange de matières plastiques comportant un pourcentage de matières plastiques lourdes, notamment pour le traitement d'une fraction légère de déchiquetage provenant du recyclage de véhicules automobiles, selon lequel
a) on fragmente par application d'impacts et/ou chocs le matériau à traiter,
b) ensuite on le sépare, en fonction de la densité et/ou du poids, en une fraction légère contenant des matières plastiques légères et une fraction lourde contenant des matières plastiques lourdes, et
c) on broie la fraction légère,
**caractérisé en ce**
**qu'**on fragmente et on traite à sec la fraction lourde dans un dispositif de traitement séparé (31-39, 311-345).

2. Procédé selon la revendication 1, **caractérisé en ce qu'**on tamise et/ou on trie par voie électrostatique la fraction lourde après la fragmentation.

3. Procédé selon la revendication 1 ou 2, **caractérisé en ce qu'**avant la séparation du matériau à traiter en une fraction légère et une fraction lourde, on sépare, par tri, des composants magnétiques à partir du matériau à traiter.

4. Procédé selon la revendication 3, **caractérisé en ce qu'**on fragmente des composants magnétiques, qu'on sépare à nouveau le matériau fragmenté en des composants magnétiques et des composants amagnétiques, et qu'on envoie à nouveau les composants amagnétiques au matériau à traiter.

5. Procédé selon l'une des revendications précédentes, **caractérisé en ce qu'**on sépare du matériau à traiter des particules qui dépassent une certaine taille pouvant être prédéterminée, qu'on les fragmente pour les amener à la taille pouvant être prédéterminée et qu'on les renvoie au matériau à traiter.

6. Procédé selon l'une des revendications précédentes, **caractérisé en ce que** la fragmentation s'effectue au moyen de l'application d'impacts et/ou de chocs dans un broyeur à marteaux (12,22).

7. Procédé selon l'une des revendications précédentes, **caractérisé en ce qu'**on sépare par tamisage, du matériau à traiter, des particules, qui ont une taille inférieure à une certaine taille pouvant être prédéterminée (matériau fin), avant la séparation du matériau en une fraction légère et une fraction lourde.

8. Procédé selon l'une des revendications précédentes, **caractérisé en ce que** la séparation du matériau à traiter en une fraction légère et en une fraction lourde est réalisée à l'aide d'une séparation à air et/ou par aspiration de la fraction légère.

9. Procédé selon l'une des revendications précédentes, **caractérisé en ce qu'**on broie la fraction légère dans un dispositif d'agglomération.

10. Procédé selon l'une des revendications précédentes, **caractérisé en ce qu'**on aspire les composants volatils à partir de la fraction légère broyée.

11. Procédé selon l'une des revendications précédentes, **caractérisé en ce qu'**on trie la fraction légère broyée, en fonction de la densité et/ou du poids et qu'on broie à nouveau le matériau léger résultant de ce tri.

12. Procédé selon l'une des revendications précédentes, **caractérisé en ce qu'**on sépare, par tri, des substances magnétiques à partir de la fraction légère broyée.

13. Procédé selon l'une des revendications précédentes, **caractérisé en ce que**
a) on sépare, par tri, des composants magnétiques à l'aide d'un séparateur magnétique (11) à partir du matériau à traiter;
b) on fragmente les composants magnétiques, on sépare le matériau broyé avec un autre séparateur magnétique (15) en des composants magnétiques et des composants amagnétiques et on renvoie les composants amagnétiques au matériau à traiter;
c) on broie le matériau à traiter avec un broyeur à marteaux (22) pour l'amener à une taille pouvant être prédéterminée,
d) on sépare par tamisage la matière fine du matériau à traiter, dans une section (25) de tamisage de la matière fine;
c) on sépare le matériau à traiter, au moyen d'un tamisage à air, en une fraction légère et en une fraction lourde;
f) on élimine des métaux paramagnétiques de la fraction lourde à l'aide d'un séparateur (31) de métaux non ferreux, on les fragmente dans un broyeur découpeur (35) et on les trie ensuite par voie électrostatique;
g) on homogénéise la fraction lourde dans un silo de mélange (36);
h) on broie la fraction légère;
i) on sépare la fraction légère broyée, à l'aide d'un séparateur à air (44), en une matière légère et une matière lourde, la matière légère étant à nouveau broyée;
j) on élimine des métaux paramagnétiques de la fraction légère broyée, à l'aide d'un séparateur (45) de métaux non ferreux.

14. Installation pour traiter un mélange de matières plastiques comportant un pourcentage de matières plastiques lourdes, notamment pour le traitement de la fraction légère de déchiquetage provenant du recyclage de véhicules automobiles, comprenant
a) un étage de fragmentation servant à fragmenter le matériau à traiter, sous l'action d'impacts et/ou de chocs,
b) au moins un étage de traitement monté en aval et servant à séparer le matériau à traiter en fonction de la densité et/ou du poids en une fraction légère contenant des matières plastiques légères et une fraction lourde contenant des matières plastiques lourdes, ainsi que
c) un étage de fragmentation pour broyer la fraction légère,
**caractérisée par**
un dispositif de traitement séparé (31-39; 311-345) pour la fraction lourde comportant un étage de fragmentation (35,322) et d'autres étages de traitement à sec (32,331) de sorte qu'après séparation du matériau à traiter en une fraction légère et en une fraction lourde, les deux fractions peuvent être traitées respectivement séparément dans l'installation.

15. Installation selon la revendication 14, **caractérisée en ce qu'**un étage de tamisage (331) et/ou un séparateur électrostatique (32) sont montés en aval de l'étage de fragmentation (35,322) pour la fraction lourde.

16. Installation selon la revendication 14 ou 15, **caractérisée par** un séparateur magnétique (11), qui est installé en amont de l'étage de traitement (22) pour trier le matériau à traiter, en fonction de la densité et/ou du poids.

17. Installation selon la revendication 16, **caractérisée en ce que** la sortie magnétique du séparateur magnétique (11) installé en amont est reliée à un étage de fragmentation (12), qui est installé en amont d'un autre séparateur magnétique (15), dont la sortie amagnétique est reliée à d'autres étages de traitement (21,22) de l'installation.

18. Installation selon l'une des revendications 14 à 17, **caractérisée par** un tamis (21) à grandes mailles ou à mailles moyennes, dont la sortie de l'excès de matières tamisées est reliée à l'étage de fragmentation (22) pour le matériau à traiter.

19. Installation selon l'une des revendications 14 à 18, **caractérisée par** un tamis (25) à mailles fines servant à séparer la matière fine par tamisage à partir du matériau à traiter et qui est monté en amont de l'étage de traitement (29) servant à trier le matériau à traiter en fonction de la densité et/ou du poids.

20. Installation selon l'une des revendications 14 à 19, **caractérisée en ce que** l'étage de traitement (29) est conçu pour la séparation de la fraction légère, de la fraction lourde du matériau à traiter, sous la forme d'un séparateur à air (60,130) ou d'un dispositif d'aspiration (50-54).

21. Installation selon l'une des revendications 14 à 20, **caractérisée en ce que** pour le broyage de la fraction légère il est prévu un dispositif d'agglomération.

22. Installation selon l'une des revendications 14 à 21, **caractérisée en ce qu'**en aval de l'étage de fragmentation (41) servant au broyage fin de la fraction légère est monté un étage de traitement (44) servant à trier la fraction légère broyée, en fonction de la densité et/ou du poids et dont la sortie pour la matière légère est reliée à l'étage de fragmentation (41).

23. Installation selon l'une des revendications 14 à 22, **caractérisée en ce qu'**un séparateur de métaux (45) est installé en aval de l'étage de fragmentation (41) pour le broyage fin de la fraction légère.
